# EUROPÄISCHE PATENTSCHRIFT

(11) **EP 1 801 634 B1**
(45) Veröffentlichungstag und Bekanntmachung des Hinweises auf die Patenterteilung: **07.03.2012**
(21) Anmeldenummer: 06026476.9
(22) Anmeldetag: 20.12.2006
(51) Int. Cl.: G02B 23/14, F41G 1/00, G02B 23/00, G02B 15/16, G02B 7/10

(54) **Fernrohr mit variabler Vergrösserung**
Telescope with variable enlargement
Télescope à agrandissement variable

(30) Priorität: 21.12.2005 DE 102005063245
(43) Veröffentlichungstag der Anmeldung: 27.06.2007
(73) Patentinhaber: Carl Zeiss Sports Optics GmbH, 35576 Wetzlar (DE)
(72) Erfinder: Wagner, Thomas, 35435 Wettenberg (DE); Tautz, Volker, Dr., 35578 Wetzlar (DE)
(74) Vertreter: Witte, Weller & Partner

(56) Entgegenhaltungen:
- EP-A- 1 081 527
- DE-A1-102006 021 364
- DE-B- 1 203 975
- US-A- 3 045 545
- US-A- 3 438 689
- US-A- 4 634 236
- US-A- 5 576 892
- US-A- 5 640 632
- US-A- 5 790 316
- Heinz Haferkorn: "Optik", 2003, Wiley-VCH, Weinheim ISBN: 3-527-40372-8 pages 266-283,

## Beschreibung

Die Erfindung betrifft ein Fernrohr mit einer optischen Achse, bei dem, von einer Objektseite her gesehen, entlang der optischen Achse ein Objektiv, zwei unabhängig voneinander entlang der optischen Achse verschiebbare Linsengruppen mit zusammen variabler Vergrößerung, sowie ein Okular vorgesehen sind, wobei die Linsengruppen ein Umkehrsystem bilden.

Ein Fernrohr der vorstehend genannten Art ist aus dem Dokument US 3 045 545 A bekannt.

Das bekannte Fernrohr weist, von der Objektseite her gesehen, ein Objektiv, ein aus zwei Linsengruppen bestehendes Zoom-System, ein Prismen-Umkehrsystem sowie ein Okular auf. Die Linsengruppen bilden dabei ein Umkehrsystem. Das Fernrohr hat eine relativ große Baulänge. Besondere Maßnahmen zum Schutz gegen Falschlicht sind bei diesem Fernrohr nicht getroffen.

Ein weiteres derartiges Fernrohr, bei dem jedoch die Linsengruppen kein Umkehrsystem bilden, ist aus dem Dokument DE 10 2004 001 481 A1 bekannt.

Fernrohre, speziell Zielfernrohre mit veränderlicher Vergrößerung sind allgemein bekannt, beispielsweise aus dem Dokument DE 1 203 975.

Darüber hinaus sind z.B. aus dem Dokument US 5 973 861 A1 auch Fernrohre mit veränderlicher Vergrößerung bekannt, die ein aus zwei Linsengruppen bestehendes Zoom- und Umkehrsystem aufweisen.

Bei Fernrohren kann, wie bei anderen optischen Beobachtungssystemen auch, so genanntes Falschlicht auftreten. Dieses Falschlicht entsteht üblicherweise im Bereich des Umkehrsystems. Es wird mit der eigentlichen Abbildung des Objektes abgebildet und überlagert diese. Dadurch kommt es zu einer Minderung der Bildgüte. Bei bekannten Fernrohren wird das Falschlicht durch den Freidurchmesser der verwendeten Linsen bestimmt.

Aus den Dokumenten DE 36 02 859 A1 und US 4 273 414 A ist jeweils ein fotografisches Objektiv mit variabler Brennweite bekannt. Bei diesen Objektiven ist eine Öffnungsblende innerhalb der bildseitigen Linsengruppe des Zoom-Systems angeordnet und wird mit dieser verfahren. Ein Umkehrsystem ist naturgemäß bei diesen Objektiven nicht vorgesehen.

In dem Dokument DE 22 59 723 C3 ist ein Vario-Objektiv beschrieben, bei dem die Öffnungszahl über den gesamten Brennweitenbereich konstant gehalten werden soll. Wegen des großen Zoom-Bereiches ist dieses Objektiv mit zwei hintereinander geschalteten Zoom-Systemen mit jeweils zwei festen und zwei beweglichen Linsengruppen versehen. Zwischen den beiden Zoom-Systemen ist eine Öffnungsblende angeordnet, deren axiale Position und Öffnung in Abhängigkeit von der axialen Stellung der beweglichen Linsengruppen verstellbar ist. Auch hier fehlt ein Umkehrsystem.

Das Dokument US 5 790 316 A beschreibt ebenfalls ein Zoom-Objektiv. Bei diesem Objektiv ist eine als "flare cut stop" bezeichnete Blende zwischen zwei Linsengruppen angeordnet. Die Blende dient zum Unterdrücken des so genannten "coma flare", das beim Verändern der Brennweite auftritt und bewirkt, dass ein Teil des bildgebenden Strahlenbündels am Rande nicht gut fokussiert ist und daher andere Bildteile überlagert. Die Blende schattet diesen Teil des bildgebenden Strahlenbündel ab.

Das Dokument DE 38 13 992 A1 offenbart ein Okular variabler Brennweite, bei dem zwischen den beiden verschiebbaren Linsengruppen eine Feldblende angeordnet ist. Eine Feldblende begrenzt jedoch im Gegensatz zu einer Öffnungs- oder Abschattungsblende das Sehfeld, d.h. den beobachtbaren Bereich der Objektebene. Eine Reduzierung von Falschlicht wird auf diese Weise nicht erreicht. Ein ähnliches optisches System ist auch in dem Dokument US 5 576 892 offenbart.

In dem Dokument US 3 438 689 A ist ein teleskopischer Zoom-Kamerasucher beschrieben. Der Sucher weist eine Objektiv-Linsengruppe, eine Kollektorlinse, eine Erektorlinse sowie eine auf der von der Objektivgruppe abgewandten Seite der Erektorlinse befindliche Blende auf. Eine Linse der Objektivgruppe, die Erektorlinse und die Blende sind über ein Gestänge starr miteinander verbunden. Das Gestänge ist in Richtung der optischen Achse des Suchers verschiebbar.

Das Dokument US 5 640 632 beschreibt einen weiteren teleskopischen Zoom-Sucher. Der Sucher weist eine Objektiv-Linsengruppe auf, bei der in einem Ausführungsbeispiel (Fig. 12(A) und 12(B)) zwei unabhängig voneinander bewegbare Linsen eine ebenfalls unabhängig bewegbare Blende zwischen sich einschließen.

Das Dokument US 4 634 236 A beschreibt ein viergliedriges Zoom-Objektiv, bei dem in einem Ausführungsbeispiel (Fig. 8A und 8B) neben mehreren, unabhängig voneinander bewegbaren Linsengruppen eine ebenfalls bewegliche Blende angeordnet ist.

In dem Dokument EP 1 081 527 A2 ist ein optisches Beobachtungssystem offenbart, bei dem das Objektiv zwei bewegliche Glieder enthält und das zweite dieser Glieder aus Spiegeln besteht, alsternativ aber auch beide Glieder aus Spiegeln aufgebaut sein können und zusätzlich als Umkehrsystem wirken.

Der Erfindung liegt daher die Aufgabe zugrunde, ein Fernrohr der eingangs genannten Art dahingehend weiterzubilden, dass ein kompaktes Fernrohr mit weniger Falschlicht als bei bekannten Fernrohren zur Verfügung gestellt wird.

Bei einem Fernrohr der eingangs genannten Art wird diese Aufgabe erfindungsgemäß dadurch gelöst, dass zwischen den Linsengruppen eine Falschlicht außerhalb des zur Abbildung benötigten Strahlenbündels unterdrückende Abschattblende angeordnet ist, und dass die Abschattblende in Abhängigkeit von der axialen Position der Linsengruppen entlang der optischen Achse verschiebbar ist, wobei sich die Abschattblende bei jedem eingestellten Vergrößerungsfaktor mindestens näherungsweise an dem Ort befindet, an dem ein Schwerstrahl des vom jeweiligen Sehrand ausgehenden Strahlenbündels die optische Achse schneidet.

Die der Erfindung zugrunde liegende Aufgabe wird auf diese Weise vollkommen gelöst.

Dadurch, dass eine Abschattblende in das Zoom-System integriert wird, entsteht nämlich ein System, bei dem der wirksame Freidurchmesser so klein ist, dass das am Innendurchmesser entstehende Falschlicht abgeblendet wird, ohne bei der Abbildung zu vignettieren.

Bei der Erfindung wird die Abschattblende derart entlang der optischen Achse bewegt, dass sie sich bei jedem eingestellten Vergrößerungsfaktor mindestens näherungsweise an dem Ort befindet, an dem ein Schwerstrahl des vom jeweiligen Sehrand ausgehenden Strahlenbündels die optische Achse schneidet.

Diese Maßnahme hat den Vorteil, dass bei jedem eingestellten Vergrößerungsfaktor das Abblenden des Falschlichts besonders gut gelingt.

Weiter ist erfindungsgemäß bevorzugt, wenn die Linsengruppen mittels einer ersten bzw. zweiten Verfahreinrichtung, vorzugsweise mittels einer ersten bzw. einer zweiten Steuerkurve, entlang der optischen Achse verschiebbar sind.

Diese an sich bekannte Maßnahme hat den Vorteil, dass die Linsengruppen unabhängig voneinander verschoben werden können, vorzugsweise mittels eines Drehrings, dessen Drehbewegung über die Steuerkurven in eine Linearbewegung entlang der optischen Achse umgesetzt wird.

Bei diesem Ausführungsbeispiel kann in weiter bevorzugter Ausgestaltung die Öffnungsblende mittels einer dritten Verfahreinrichtung, vorzugsweise mittels einer dritten Steuerkurve, entlang der optischen Achse verschiebbar sein, wobei die dritte Verfahreinrichtung von der ersten und von der zweiten Verfahreinrichtung abhängig ist.

Diese Maßnahme hat den Vorteil, dass auch die Stellung der Blende in ebenso einfacher Weise, nämlich zugleich mit dem Verdrehen des Drehrings und nahezu frei wählbar, eingestellt werden kann.

Bei einem weiteren Ausführungsbeispiel der Erfindung ist die Öffnung der Öffnungsblende in Abhängigkeit von der axialen Position der Linsengruppen einstellbar.

Diese Maßnahme hat den Vorteil, dass das Abblenden des Falschlichts bei jedem eingestellten Vergrößerungsfaktor weiter optimiert werden kann.

Zur weiteren Optimierung des erfindungsgemäßen Fernrohrs kann zwischen dem Objektiv und der objektseitigen Linsengruppe eine erste Feldblende angeordnet sein, insbesondere für niedrige Vergrößerungen, die weiter bevorzugt an einer festen Position entlang der optischen Achse, insbesondere in einer ersten Zwischenbildebene angeordnet ist.

Gleichermaßen kann zur Begrenzung des Sehfeldes zwischen der bildseitigen Linsengruppe und dem Okular eine zweite Feldblende angeordnet sein, vorzugsweise ebenfalls an einer festen Position entlang der optischen Achse, insbesondere in einer zweiten Zwischenbildebene.

Schließlich kann noch zwischen dem Objektiv und der objektseitigen Linsengruppe, insbesondere in einer ersten Zwischenbildebene, eine Feldlinse angeordnet sein, die bevorzugt mit einer Strichplatte kombiniert ist.

Diese Maßnahme hat den Vorteil, dass das Fernrohr auch als Zielfernrohr einsetzbar ist.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1:: in schematischer Darstellung einen Strahlengang eines Ausfüh- rungsbeispiels eines erfindungsgemäßen Fernrohrs;
- Figur 2:: einen vergrößerten Ausschnitt aus Figur 1, darstellend ein Umkehrsystem mit variabler Vergrößerung; und
- Figur 3:: in fünf Teildarstellungen a) bis e) Betriebsstellungen von Linsen- gruppen des Fernrohrs bei unterschiedlicher Vergrößerung.

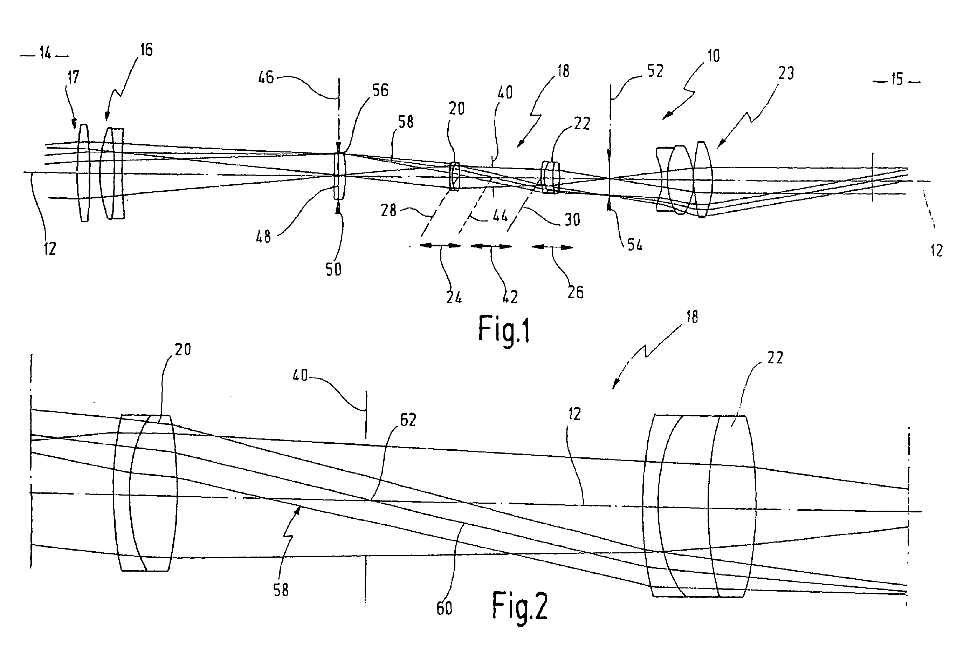

In Figur 1 bezeichnet 10 als ganzes ein Ausführungsbeispiel eines erfindungsgemäßen Fernrohrs, das mit seinem Strahlengang schematisch dargestellt ist. Das Fernrohr 10 hat eine optische Achse 12. In Figur 1 ist die Objektseite 14 links und die Bildseite 15 rechts dargestellt.

Auf der Objektseite 14 erkennt man ein Objektiv 16, das ggf. mit einer Objektiv-Blende 17 versehen sein bzw. diese selber bilden kann.

Rechts neben dem Objektiv 16 ist auf der optischen Achse 12 ein Umkehrsystem 18 mit variabler Vergrößerung zu erkennen. Es handelt sich daher um ein System, das die beiden Funktionen der variablen Vergrößerung und der Bildumkehr in sich vereinigt.

Das Umkehrsystem 18 weist eine erste Linsengruppe 20 sowie eine zweite Linsengruppe 22 auf, die in vorgegebenem axialen Abstand voneinander angeordnet sind.

Schließlich befindet sich auf der Bildseite 15 des Fernrohrs 10 noch ein Okular 23.

Die Linsengruppen 20 und 22 sind einzeln entlang der optischen Achse 12 verschiebbar, wie mit Pfeilen 24 und 26 angedeutet. Zum Verschieben der Linsengruppen 20 und 22 können alle geeigneten Verfahreinheiten eingesetzt werden. Bevorzugt sind jedoch manuell oder motorisch betätigte mechanische Verfahreinheiten mit einer ersten bzw. zweiten Steuerkurve 28, 30, wie dies an sich bekannt ist.

Zwischen den Linsengruppen 20, 22 befindet sich eine Öffnungs- oder Abschattblende 40. Eine Öffnungs- oder Abschattblende beeinflusst bekanntlich im Gegensatz zu einer Feldblende das Sehfeld nicht. Sie bestimmt die Größe des Strahlenbündels für die Abbildung des Achspunktes und unterdrückt damit das Falschlicht, das außerhalb des zur Abbildung benötigten Strahlenbündels entsteht. Eine Öffnungsblende hat damit die selbe Funktion wie eine herkömmliche Irisblende in einem Fotoapparat.

Die Öffnungsblende 40 ist ebenfalls entlang der optischen Achse 12 verschiebbar, wie mit einem Pfeil 42 angedeutet, und zwar vorzugsweise gleichermaßen mittels einer dritten Steuerkurve 44. Dabei erfolgt die Verschiebung der Öffnungsblende 40 in Abhängigkeit von der jeweils eingestellten Vergrößerung, d.h. in Abhängigkeit von der jeweiligen axialen Position der Linsengruppen 20, 22.

Zwischen dem Objektiv 16 und der ersten, objektseitigen Linsengruppe 20 befindet sich, vorzugsweise raumfest und in einer ersten Zwischenbildebene 46, eine erste Feldlinse 48 sowie weiter vorzugsweise eine erste Feldblende 50, insbesondere für niedrige Vergrößerungen. Die erste Feldlinse 48 kann mit einer Strichplatte versehen sein, wenn das Fernrohr 10 ein Zielfernrohr ist. Die erste Feldlinse 48 und die erste Feldblende 50 können baulich vereinigt sein.

Zwischen der zweiten, bildseitigen Linsengruppe 22 und dem Okular 23 befindet sich, vorzugsweise raumfest und in einer zweiten Zwischenbildebene 52, eine zweite Feldblende 54.

Die jeweilige axiale Lage der Öffnungsblende 40 soll nun anhand Figur 1 sowie der vergrößerten Darstellung des Umkehrsystems 18 in Figur 2 erläutert werden:

In der ersten Zwischenbildebene 46 wird das Sehfeld begrenzt, sei es durch die lichte Weite der ersten Feldblende 48 oder die jeweils vorhandene erste Feldblende 50. Damit ist ein Sehrand 56 definiert (Figur 1). Das vom Sehrand 56 ausgehende Strahlenbündel 58 (Figuren 1 und 2) tritt durch die erste Linsengruppe 20 hindurch. Der Schwer- oder Mittelstrahl 60 dieses Strahlenbündels 58 schneidet die optische Achse 12 an einem Ort 60. Der Ort 60 bestimmt wiederum die optimale Lage der Öffnungsblende 40.

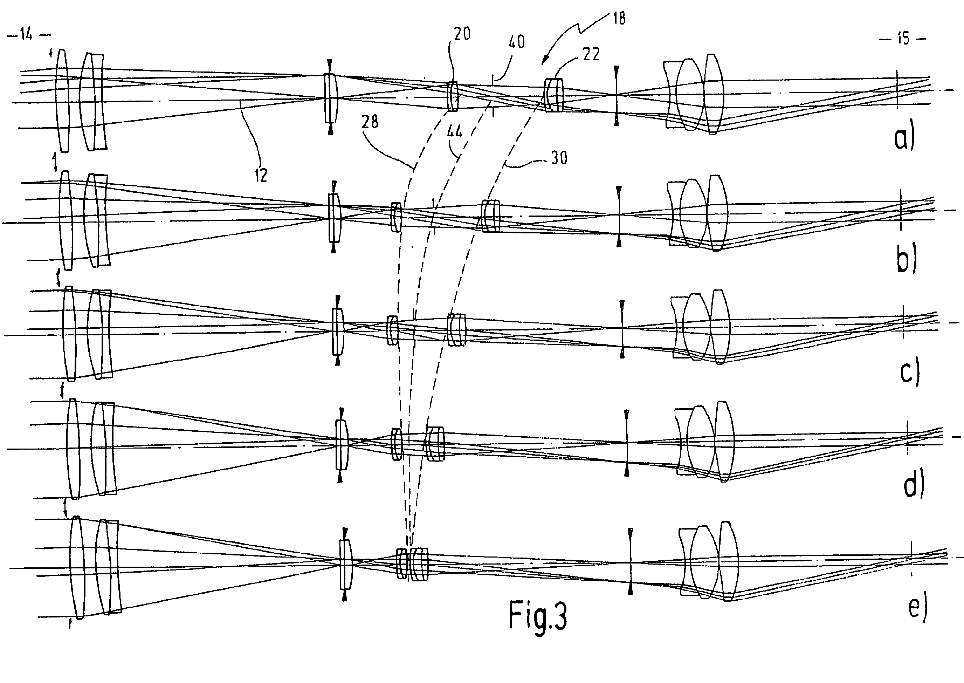

Figur 3 zeigt schließlich noch fünf verschiedene Einstellungen a) bis e) des Fernrohrs 10, wobei a) die niedrigste und e) die höchste Vergrößerung darstellt. Die drei Steuerkurven 28, 30 und 44, die sich in der Stellung e) nahezu treffen, sind deutlich zu erkennen.

## Patentansprüche

1. Fernrohr mit einer optischen Achse (12), bei dem, von einer Objektseite (14) her gesehen, entlang der optischen Achse (12) ein Objektiv (16), zwei unabhängig voneinander entlang der optischen Achse (12) verschiebbare (24, 26) Linsengruppen (20, 22) mit zusammen variabler Vergrößerung, sowie ein Okular (23) vorgesehen sind, wobei die Linsengruppen (20, 22) ein Umkehrsystem (18) bilden, **dadurch gekennzeichnet, dass** zwischen den Linsengruppen (20, 22) eine Falschlicht außerhalb des zur Abbildung benötigten Strahlenbündels unterdrückende Abschattblende (40) angeordnet ist, und dass die Abschattblende (40) in Abhängigkeit von der axialen Position der Linsengruppen (20, 22) entlang der optischen Achse (12) verschiebbar (42) ist, wobei sich die Abschattblende (40) bei jedem eingestellten Vergrößerungsfaktor mindestens näherungsweise an dem Ort (62) befindet, an dem ein Schwerstrahl (60) des vom jeweiligen Sehrand (56) ausgehenden Strahlenbündels (58) die optische Achse (12) schneidet.

2. Fernrohr nach Anspruch 1, **dadurch gekennzeichnet, dass** die Linsengruppen (20, 22) mittels einer ersten bzw. zweiten Verfahreinrichtung, vorzugsweise mittels einer ersten bzw. einer zweiten Steuerkurve (28, 30), entlang der optischen Achse (12) verschiebbar sind.

3. Fernrohr nach Anspruch 2, **dadurch gekennzeichnet, dass** die Abschattblende (40) mittels einer dritten Verfahreinrichtung, vorzugsweise mittels einer dritten Steuerkurve (44), entlang der optischen Achse (12) verschiebbar ist, und dass die dritte Verfahreinrichtung von der ersten und von der zweiten Verfahreinrichtung abhängig ist.

4. Fernrohr nach einem oder mehreren der Ansprüche 1 bis 3, **dadurch gekennzeichnet, dass** die Öffnung der Abschattblende (40) in Abhängigkeit von der axialen Position der Linsengruppen (20, 22) einstellbar ist.

5. Fernrohr nach einem oder mehreren der Ansprüche 1 bis 4, **dadurch gekennzeichnet, dass** zwischen dem Objektiv (16) und der objektseitigen Linsengruppe (20) eine erste Feldblende (50) angeordnet ist.

6. Fernrohr nach Anspruch 5, **dadurch gekennzeichnet, dass** die erste Feldblende (50) an einer festen Position entlang der optischen Achse (12) angeordnet ist.

7. Fernrohr nach Anspruch 6, **dadurch gekennzeichnet, dass** die erste Feldblende (50) in einer ersten Zwischenbildebene (46) angeordnet ist.

8. Fernrohr nach einem oder mehreren der Ansprüche 1 bis 7, **dadurch gekennzeichnet, dass** zwischen der bildseitigen Linsengruppe (22) und dem Okular (23) eine zweite Feldblende (54) angeordnet ist.

9. Fernrohr nach Anspruch 8, **dadurch gekennzeichnet, dass** die zweite Feldblende (54) an einer festen Position entlang der optischen Achse (12) angeordnet ist.

10. Fernrohr nach Anspruch 9, **dadurch gekennzeichnet, dass** die zweite Feldblende (54) in einer zweiten Zwischenbildebene (52) angeordnet ist.

11. Fernrohr nach einem oder mehreren der Ansprüche 1 bis 10, **dadurch gekennzeichnet, dass** zwischen dem Objektiv (16) und der objektseitigen Linsengruppe (20) eine Feldlinse (48) angeordnet ist.

12. Fernrohr nach Anspruch 11, **dadurch gekennzeichnet, dass** die Feldlinse (48) mit einer Strichplatte kombiniert ist.

13. Fernrohr nach Anspruch 12, **dadurch gekennzeichnet, dass** die Feldlinse (48) in einer ersten Zwischenbildebene (46) angeordnet ist.

## Claims

1. A telescope having an optical axis (12), wherein, as seen from an object side (14), there are provided along the optical axis (12) an objective (16), two lens groups (20, 22) adapted to be shifted (24, 26) along the optical axis (12) independently from one another and having together a variable magnification, and an eyepiece (23), wherein the lens groups (20, 22) form an inversion system (18), **characterized in that** a shading diaphragm (40) is provided between the lens groups (20, 22), which suppresses stray light outside the ray bundle required for imaging, and that the shading diaphragm (40) is adapted to be shifted along the optical axis (12) as a function of the axial position of the lens groups (20, 22), wherein, for any set magnification factor, the shading diaphragm (40) is located at least approximately at the position (62) where a central ray (60) of the ray bundle (58), originating from the vision rim (56), intersects the optical axis (12).

2. The telescope of claim 1, **characterized in that** the lens groups (20, 22) are adapted to be shifted along the optical axis (12) by means of a first and a second displacement unit, preferably by means of a first and a second cam groove (28, 30).

3. The telescope of claim 2, **characterized in that** the shading diaphragm (40) is adapted to be shifted along the optical axis (12) by means of a third displacement unit, preferably by means of a third cam groove (44), the third displacement unit being dependent on the first and the second displacement unit.

4. The telescope of one or more of claims 1 to 3, **characterized in that** the aperture of the shading diaphragm (40) is adapted to be adjusted as a function of the axial position of the lens groups (20, 22).

5. The telescope of one or more of claims 1 to 4, **characterized in that** a first field stop (50) is arranged between the objective (16) and the object-sided lens group (20).

6. The telescope of claim 5, **characterized in that** the first field stop (50) is located at a fixed position along the optical axis (12).

7. The telescope of claim 6, **characterized in that** the first field stop (50) is located at a first intermediate image plane (46).

8. The telescope of one or more of claims 1 to 7, **characterized in that** a second field stop (54) is located between the image-sided lens group (22) and the eyepiece (23).

9. The telescope of claim 8, **characterized in that** the second field stop (54) is located at a fixed position along the optical axis (12).

10. The telescope of claim 9, **characterized in that** the second field stop (54) is located at a second intermediate image plane (52).

11. The telescope of one or more of claims 1 to 10, **characterized in that** a field lens (48) is located between the objective (16) and the object-sided lens group (20).

12. The telescope of claim 11, **characterized in that** the field lens (48) is combined with a reticle.

13. The telescope of claim 12, **characterized in that** the field lens (48) is located at a first intermediate image plane (46).

## Revendications

1. Télescope ayant un axe optique (12), dans lequel sont prévus le long de l'axe optique (12), considéré depuis un côté objet (14), un objectif (16), deux groupes de lentilles (20, 22) mobiles en translation (24, 26) indépendamment l'un de l'autre le long de l'axe optique (12) et ayant un agrandissement conjointement variable, ainsi qu'un oculaire (23), les groupes de lentilles (20, 22) formant un système d'inversion (18), **caractérisé en ce qu'**un diaphragme d'obscurcissement (40), supprimant la lumière parasite en dehors du faisceau de rayons nécessaire pour la reproduction, est disposé entre les groupes de lentilles (20, 22), et **en ce que** le diaphragme d'obscurcissement (40) est mobile en translation (42) le long de l'axe optique (12) en fonction de la position axiale des groupes de lentilles (20, 22), sachant que le diaphragme d'obscurcissement (40) se trouve, pour chaque facteur d'agrandissement réglé, au moins approximativement à l'endroit (62) où un rayon lourd (60) du faisceau de rayons (58) partant du bord de collimation (56) respectif coupe l'axe optique (12).

2. Télescope selon la revendication 1, **caractérisé en ce que** les groupes de lentilles (20, 22) sont mobiles en translation le long de l'axe optique (12) au moyen respectivement d'un premier et d'un deuxième dispositifs de déplacement, de préférence au moyen respectivement d'une première et d'une deuxième cames de commande (28, 30).

3. Télescope selon la revendication 2, **caractérisé en ce que** le diaphragme d'obscurcissement (40) est mobile en translation le long de l'axe optique (12) au moyen d'un troisième dispositif de déplacement, de préférence au moyen d'une troisième came de commande (44), et **en ce que** le troisième dispositif de déplacement est dépendant du premier et du deuxième dispositifs de déplacement.

4. Télescope selon l'une quelconque des revendications 1 à 3, **caractérisé en ce que** l'ouverture du diaphragme d'obscurcissement (40) est réglable en fonction de la position axiale des groupes de lentilles (20, 22).

5. Télescope selon l'une quelconque des revendications 1 à 4, **caractérisé en ce qu'**un premier diaphragme de champ (50) est disposé entre l'objectif (16) et le groupe de lentilles (20) côté objet.

6. Télescope selon la revendication 5, **caractérisé en ce que** le premier diaphragme de champ (50) est disposé en une position fixe le long de l'axe optique (12).

7. Télescope selon la revendication 6, **caractérisé en ce que** le premier diaphragme de champ (50) est disposé dans un premier plan d'image intermédiaire (46).

8. Télescope selon l'une quelconque des revendications 1 à 7, **caractérisé en ce qu'**un deuxième diaphragme de champ (54) est disposé entre le groupe de lentilles (22) côté image et l'oculaire (23).

9. Télescope selon la revendication 8, **caractérisé en ce que** le deuxième diaphragme de champ (54) est disposé en une position fixe le long de l'axe optique (12).

10. Télescope selon la revendication 9, **caractérisé en ce que** le deuxième diaphragme de champ (54) est disposé dans un deuxième plan d'image intermédiaire (52).

11. Télescope selon l'une quelconque des revendications 1 à 10, **caractérisé en ce qu'**une lentille de champ (48) est disposée entre l'objectif (16) et le groupe de lentilles (20) côté objet.

12. Télescope selon la revendication 11, **caractérisé en ce que** la lentille de champ (48) est combinée à un réticule.

13. Télescope selon la revendication 12, **caractérisé en ce que** la lentille de champ (48) est disposée dans un premier plan d'image intermédiaire (46).
